Europäisches Patentamt

European Patent Office

Office européen des brevets

(11) Veröffentlichungsnummer: **0 100 894**
A2

## (12) EUROPÄISCHE PATENTANMELDUNG

(21) Anmeldenummer: 83106799.6

(22) Anmeldetag: 11.07.83

(51) Int. Cl.³: **G 06 F 3/023**

(30) Priorität: 21.07.82 DE 3227269

(43) Veröffentlichungstag der Anmeldung:
22.02.84 Patentblatt 84/8

(84) Benannte Vertragsstaaten:
AT BE CH DE FR GB IT LI NL SE

(71) Anmelder: SIEMENS AKTIENGESELLSCHAFT
Berlin und München Wittelsbacherplatz 2
D-8000 München 2(DE)

(72) Erfinder: Clever, Axel, Ing. grad.
Am Roppenbild 6
D-6729 Kuhardt(DE)

(54) Bedienungsfeld eines Mehrfach-Funktionsgerätes.

(57) Bedienungsfeld eines Mehrfach-Funktionsgerätes, bei dem für das geleitete Eintasten von zur Anwahl einzelner Funktionen des Gerätes notwendigen Eingaben in einem Tastenfeld (3) sowohl Klassentasten für jeweils mehreren der Eingaben übergeordnete und einander hierarchisch zugeordnete Eingabeklassen (A, B, C, D) als auch mindestens so viele Tasten zweiter Art vorgesehen sind, wie die Anzahl der einer größten Klasse untergeordneten Eingaben beträgt und sich in einem in Spalten und Zeilen geordneten Anzeigefeld (2) am Kopf jeder Spalte jeweils ein Klassenbezeichnungsschild und in den folgenden Zeilen jeder Spalte Benennungsschilder für die der entsprechenden Klasse (A, B, C, D) untergeordneten Eingaben befinden, welche Schilder Zeichen, die alphanumerischen Zeichen auf den den Schildern zugeordneten Tasten entsprechen, sowie jeweils ein Bereitschaftsmelde- (9) und ein Eintastrückmeldezeichen (10, 11) tragen.

Die Erfindung wird angewandt bei Mehrfach-Funktionsgeräten.

EP 0 100 894 A2

SIEMENS AKTIENGESELLSCHAFT

Berlin und München

Unser Zeichen 0100894

VPA 82 P 4430

## Bedienungsfeld eines Mehrfach-Funktionsgerätes

Die Erfindung bezieht sich auf ein Bedienungsfeld eines Mehrfach-Funktionsgerätes.
Als Beispiel für ein Mehrfach-Funktionsgerät soll hier ein sogenannter Transientenrecorder erwähnt sein, in dem zusätzliche Einrichtungen vorhanden sind, die es gestatten, die gespeicherten Transienten zu verarbeiten, beispielsweise zu klassifizieren oder zu differenzieren bzw. zu integrieren.
Bei derartigen Mehrfach-Funktionsgeräten müssen für die Anwahl einer Funktion gegebenenfalls mehrere Eingaben eingetastet werden. Es ist deshalb nicht überraschend, daß mit der Anzahl von durch das Gerät auszuübenden Funktionen auch die Anzahl der Eingabetasten ansteigt. Bedienungsfelder derartiger Geräte können leicht so viele Tasten aufweisen, daß die Bedienung der Geräte unübersichtlich ist und Fehlbedienungen sich deshalb häufen.

Der Erfindung lag die Aufgabe zugrunde, die Anzahl der Tasten für die zur Anwahl einer Funktion notwendigen Eingaben zu reduzieren und dabei gleichzeitig die bei einer Mehrfachausnutzung von Tasten oft angewendete mehrdeutige Tastenbeschriftung zu vermeiden.

Gemäß der Erfindung wird diese Aufgabe durch die kennzeichnenden Merkmale des Anspruchs 1 gelöst.

Zweckmäßig sind hierarchisch einander zugeordneten Klassen entsprechende Spalten des Anzeigefeldes mit abnehmendem Rang von links nach rechts im Anzeigefeld angeordnet.

Li 4 Bz / 19.07.1982

Zur Verringerung der Anzahl der für das Eintasten von Eingaben erforderlichen Tasten trägt dabei die Mehrfachausnutzung der Tasten zweiter Art bei, die jeweils verschiedenen Klassen von Eingaben untergeordnet sind. Die Eindeutigkeit der Zuordnung von Eingaben und Tasten wird gewahrt durch die Einführung eines besonderen Anzeigefeldes mit alle vorzunehmenden Eingaben benennenden Schildern und deren Anordnung in hierarchisch einander zugeordneten Spalten, die den einzelnen Klassen entsprechen. Bereitschaftsmelde- und Eintastrückmeldezeichen auf den entsprechenden Schildern gestatten dabei neben der Verbesserung der Übersichtlichkeit auch eine Bedienerführung, weil der jeweilige Status des Gerätes am Anzeigefeld ersichtlich ist. Die Bedienung des Gerätes wird so ohne das Studium einer Bedienungsanleitung möglich.

Als ein Beispiel für die Einteilung von Eingaben in hierarchisch einander zugeordnete Klassen sei eine erste Klasse erwähnt, die beispielsweise die zu erfassenden Meßgrößen, wie Strom, Spannung, Widerstand, Frequenz usw., umfaßt. Eine zweite Klasse kann Meßbereichsangaben oder Grenzwerte enthalten. Eine dritte Klasse kann Eingaben für den Mehrkanalbetrieb, die Summenbildung von Einzelwerten oder dergleichen umfassen. In eine vierte Klasse könnten Eingaben, welche die Art der Datenausgabe bestimmen, z. B. Display-Ausgabe oder Ausgabe an einen Datenbus, aufgenommen werden.

Sollte das Mehrfach-Funktionsgerät auch eine Tastatur zur Eingabe von Zahlen benötigen, so werden diese Tasten zweckmäßig zugleich als Tasten zweiter Art benutzt. Gegebenenfalls weisen dann eines oder mehrere der Eingabenbenennungsschilder zusätzlich eine Zahlenanzeige zur Darstellung der über die Tasten zweiter Art eingegebenen Zahlenwerte auf.

Um Verwechslungen zu vermeiden, weisen die Bereitschaftsmeldezeichen und die Eintastrückmeldezeichen voneinander
abweichende Formen und/oder Farben auf.

Die Bereitschaftsmelde- und Eintastrückmeldezeichen sind
als Zeichen eines "Ein und Aus"-Typs vorteilhafterweise
als Leuchtdioden ausgebildet.

Um die Übersichtlichkeit weiter zu steigern, werden auch
die Eintastrückmeldezeichen für beide Tastenarten farblich voneinander verschieden ausgeführt.

Bei einer Ausführung der Erfindung ist das Anzeigefeld
auf der Frontplatte des Mehrfach-Funktionsgerätes aufgedruckt. Für ein anderes Ausführungsbeispiel ist vorgesehen, das Anzeigefeld auf einem Bildschirm sichtbar zu machen.

Tasten- und Anzeigefeld können neben- oder übereinander
auf der Frontplatte des Mehrfach-Funktionsgerätes angeordnet sein. Es ist jedoch auch denkbar und in manchen
Fällen zweckmäßig, Tasten- und Anzeigefeld voneinander zu
trennen, beispielsweise das Tastenfeld in einem Zusatzgerät zum Mehrfach-Funktionsgerät oder in einem besonderen
Pult anzuordnen.

Eine Figur zeigt eine Frontplatte eines Mehrfach-Funktionsgerätes nach der Erfindung.

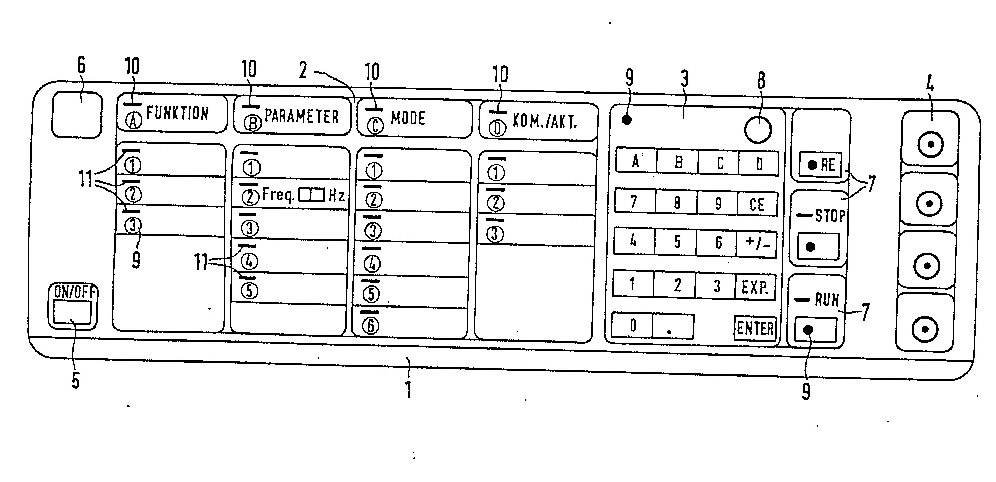

In der Figur ist die Oberfläche einer Frontplatte 1 in
drei Felder eingeteilt. Von links nach rechts folgen einem Anzeigefeld 2 ein Tastenfeld 3 und ein Anschlußfeld 4.
Links vom Tastenfeld 3 ist eine Einschalttaste 5 und eine
dazugehörige Anzeige 6 angeordnet. Das Tastenfeld 3 ist
mit einer Zehnertastatur und einigen zusätzlichen Steuertasten 7 bestückt. Über der Zehnertastatur befinden sich
in einer besonderen Zeile vier Tasten A, B, C, D, die den Eingabeklassen zugeordnet sind. Darüber ist noch ein Drehknopf 8 ohne Anschlag zu finden. Er wird für kontinuierliche Einstellungen, beispielsweise von Triggerschwellen, benutzt. Im Anschlußfeld 4 finden sich Stecker für ein- und ausgehende Signale führende Leitungen.

Das Anzeigefeld 2 ist in vier Spalten geteilt, die den vier Eingabeklassen entsprechen. Jede Spalte hat mehrere Zeilen. Das Anzeigefeld 2 bietet in konzentrierter, jedoch übersichtlicher Form das ganze von dem Mehrfach-Funktionsgerät bereitgestellte Funktionenprogramm dar. Dabei kann das Anzeigefeld 2 auf einer bedruckten Teilfläche der Frontplatte 1 selbst angeordnet oder auf einem Bildschirm abgebildet sein.

Am Kopf jeder Spalte des Anzeigefeldes 2 steht ein Klassenbezeichnungsschild, das zusätzlich zu der Klassenbezeichnung einen der Buchstaben A bis D trägt. Die Zeilen jeder Spalte tragen fortlaufende Nummern 1 bis n. Als Bereitschaftsmeldezeichen sind auf den Klassenbezeichnungsschildern A, B, C, D ebenso wie auf den Eingabenbenennungsschildern der numerierten Zeilen gelbe Leuchtdioden 9 angebracht. Leuchten diese Dioden während des Betriebes auf, so sind die entsprechenden Eingaben durch Drücken der durch die gleichen Buchstaben oder Zahlen den Schildern zugeordneten Tasten auf dem Tastenfeld 3 einzutasten. Auch im Tastenfeld 3 sind gelbe Bereit-schaftsmeldezeichen vorhanden, beispielsweise eine Leucht-diode 9 für die gesamte Zehnertastatur und den Drehknopf, sowie Dioden 9 in den einzelnen Steuertasten. Alle gelben Zeichen bedeuten Bedienbereitschaft für die entsprechenden Eingaben.
Die Anwahl von nicht gelb leuchtenden Spalten, Zeilen bzw. Bedienelementen bleibt ohne Wirkung. Ist eine Eingabe eingetastet, so erfolgt grundsätzlich eine Rückmeldung über ein andersfarbiges Eintastrückmeldezeichen 10, 11. Diese Rückmeldung erfolgt unmittelbar dort, also auf dem

- 5 -      VPA 82 P 4430

Schild des Anzeigefeldes 2, wo vorher die Bereitschaft zur Eingabe angezeigt wurde. Nach der Betätigung einer mit einem großen lateinischen Buchstaben A, B, C, D bezeichneten Klassentaste im Tastenfeld 3 leuchtet am Kopf der entsprechenden Spalte des Anzeigefeldes 2 eine rote Leuchtdiode 10 als Eintastrückmeldezeichen auf. Alle gelben Leuchtdioden 9 in den anderen Spalten des Anzeigefeldes 2 erlöschen, und in den Zeilen der rot gekennzeichneten Spalte erscheint, durch gelbe Dioden 9 markiert, ein Angebot von möglichen Eingaben.

Mit den kennzeichnenden Merkmalen des Hauptanspruches ist die hardwaremäßige (gegenständliche) Grundlage zu einer schrittweisen Bedienerführung gelegt, die durch einen entsprechend programmierten, im Mehrfach-Funktionsgerät enthaltenen Mikroprozessor gesteuert wird. Dabei muß ein Bediener des Gerätes so lange den gelb leuchtenden Bedienbereitschaftssignalen folgen, bis unter den Steuertasten des Tastenfeldes eine RUN-Taste gelb aufleuchtet, deren Betätigung dann die angewählte Funktion des Gerätes auslöst.

Wenn eine der Tasten zweiter Art in der Zehnertastatur bedient wurde, erfolgt die Eintastrückmeldung durch eine grün leuchtende Diode 11 auf dem entsprechenden Eingabenbenennungsschild. Alle grünen Leuchtdioden zusammen stellen den jeweiligen Status des Gerätes dar.

Macht eine der vom Gerät zu leistenden Funktionen die Eingabe eines Zahlenwertes erforderlich, um beispielsweise einen Grenzwert vorzugeben, so wird dieser Zahlenwert ebenfalls über die Tasten zweiter Art der Zehnertastatur eingeschrieben. Zweckmäßig ist zur Kontrolle der eingeschriebenen Zahl das entsprechende Eingabenbenennungsschild, wie in der Figur in der zweiten Spalte, zweite Zeile angedeutet, mit einer Zahlenanzeige, beispielsweise

- 6 -      VPA 82 P 4430

einer 7-Segment-Flüssigkristallanzeige, ausgerüstet, in welcher der Zahlenwert erscheint.

Zweckmäßig werden die Spalten in ihrer Rangfolge von links nach rechts bedient.


11 Patentansprüche
 1 Figur

0100894

Patentansprüche

1. Bedienungsfeld eines Mehrfach-Funktionsgerätes, d a - d u r c h  g e k e n n z e i c h n e t , daß für das Eintasten von zur Anwahl einzelner Funktionen des Gerätes notwendigen Eingaben in einem Tastenfeld (3) sowohl Klassentasten für jeweils mehreren der Eingaben übergeordnete Eingabeklassen als auch mindestens so viele Tasten zweiter Art vorgesehen sind, wie die Anzahl der einer größten Klasse untergeordneten Eingaben beträgt und sich in einem in Spalten und Zeilen geordneten Anzeigefeld (2) am Kopf jeder Spalte jeweils ein Klassenbezeichnungsschild und in den folgenden Zeilen jeder Spalte Benennungsschilder für die der entsprechenden Klasse untergeordneten Eingaben befinden, welche Schilder Zeichen, die alphanumerischen Zeichen auf den den Schildern zugeordneten Tasten entsprechen, sowie jeweils ein Bereitschaftsmelde- (9) und ein Eintastrückmeldezeichen (10, 11) tragen.

2. Bedienungsfeld nach Anspruch 1, d a d u r c h  g e - k e n n z e i c h n e t , daß einander hierarchisch zugeordneten Klassen entsprechende Spalten des Anzeigefeldes (2) mit abnehmendem Rang von links nach rechts angeordnet sind.

3. Bedienungsfeld nach Anspruch 1 oder 2, d a d u r c h  g e k e n n z e i c h n e t , daß die Tasten zweiter Art zusätzlich zur Eingabe von Zahlenwerten dienen.

4. Bedienungsfeld nach Anspruch 3, d a d u r c h  g e - k e n n z e i c h n e t , daß eines oder mehrere der Eingabenbenennungsschilder zusätzlich eine Zahlenanzeige zur Darstellung der über die Tasten zweiter Art eingegebenen Zahlenwerte aufweisen.

5. Bedienungsfeld nach Anspruch 1 oder einem der vorausgehenden Ansprüche, d a d u r c h  g e k e n n -

0100894

- 8 -    VPA 82 P 4430

z e i c h n e t , daß die Bereitschaftsmeldezeichen (9) eine von den Eintastrückmeldezeichen (10, 11) abweichende Form und/oder Farbe aufweisen.

6. Bedienungsfeld nach Anspruch 1 oder einem der vorausgehenden Ansprüche, d a d u r c h   g e k e n n - z e i c h n e t , daß die Bereitschaftsmelde- (9) und Eintastrückmeldezeichen (10, 11) von einem "Ein und Aus"-Typ sind.

7. Bedienungsfeld nach Anspruch 6, d a d u r c h   g e - k e n n z e i c h n e t , daß die Meldezeichen als Leuchtdioden (9, 10, 11) ausgebildet sind.

8. Bedienungsfeld nach Anspruch 1 oder einem der vorausgehenden Ansprüche, d a d u r c h   g e k e n n - z e i c h n e t , daß die Eintastrückmeldezeichen (10, 11) für beide Tastenarten farblich voneinander verschieden sind.

9. Bedienungsfeld nach einem der Ansprüche 1 bis 6, d a d u r c h   g e k e n n z e i c h n e t , daß das Anzeigefeld (2) auf einem Bildschirm sichtbar ist.

10. Bedienungsfeld nach Anspruch 1 oder einem der vorausgehenden Ansprüche, d a d u r c h   g e k e n n - z e i c h n e t , daß das Tastenfeld (3) und das Anzeigefeld (2) auf einer Frontplatte des Mehrfach-Funktionsgerätes angeordnet sind.

11. Bedienungsfeld nach einem der Ansprüche 1 bis 9, d a d u r c h   g e k e n n z e i c h n e t , daß das Tastenfeld (3) vom Anzeigefeld (2) getrennt ist.

82 P 4430

0100894